(19) Europäisches Patentamt
European Patent Office
Office européen des brevets

(11) **EP 2 760 714 B1**

(12) **EUROPÄISCHE PATENTSCHRIFT**

(45) Veröffentlichungstag und Bekanntmachung des Hinweises auf die Patenterteilung:
**20.03.2019 Patentblatt 2019/12**

(21) Anmeldenummer: **12770452.6**

(22) Anmeldetag: **27.09.2012**

(51) Int Cl.:
***B60T 8/1755*** (2006.01)   ***B60T 8/1766*** (2006.01)
***B60T 1/10*** (2006.01)

(86) Internationale Anmeldenummer:
**PCT/EP2012/069137**

(87) Internationale Veröffentlichungsnummer:
**WO 2013/045584 (04.04.2013 Gazette 2013/14)**

(54) **SCHLUPFGEREGELTES BREMSSYSTEM FÜR ELEKTRISCH ANGETRIEBENE KRAFTFAHRZEUGE**

SLIP-CONTROLLED BRAKING SYSTEM FOR ELECTRICALLY DRIVEN MOTOR VEHICLES

SYSTÈME DE FREINAGE À RÉGULATION DE GLISSEMENT, DESTINÉ À DES VÉHICULES ÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2011 DE 102011083650**

(43) Veröffentlichungstag der Anmeldung:
**06.08.2014 Patentblatt 2014/32**

(73) Patentinhaber: **Continental Teves AG & Co. OHG 60488 Frankfurt am Main (DE)**

(72) Erfinder:
• **ARBITMANN, Maxim**
  **60325 Frankfurt am Main (DE)**
• **CHEN, Zhenfu**
  **65824 Schwalbach (DE)**
• **RASTE, Thomas**
  **61440 Oberursel (DE)**
• **LAUER, Peter**
  **61184 Karben (DE)**
• **MUNTU, Matthias**
  **65719 Hofheim (DE)**
• **SCHMITZ, Daniel**
  **53773 Hennef (DE)**

(56) Entgegenhaltungen:
WO-A1-2009/077835   AT-U2- 12 010
DE-A1-102008 001 455   DE-A1-102009 030 816
US-A1- 2010 094 511

**Beschreibung**

Die Erfindung betrifft ein Bremssystem gemäß Oberbegriff von Anspruch 1 und ein Verfahren zur Bereitstellung schlupfgeregelter Bremsvorgänge in Fahrzeugen mit zumindest teilweise elektrischem Antrieb gemäß Oberbegriff von Anspruch 8.

Ganz oder teilweise elektrisch angetriebene Kraftfahrzeuge bzw. Elektrofahrzeuge oder Hybridfahrzeuge, welche elektrische Fahrzeugantriebe und Verbrennungsmotoren kombinieren, weisen gegenüber konventionellen Kraftfahrzeugen mit Verbrennungsmotor verringerte Emissionen auf. Eine oder mehrere elektrische Maschinen können dabei einerseits aus einer Batterie gespeist als Motor bzw. Antrieb verwendet werden, andererseits ist auch eine Verwendung als Generator bzw. Bremse möglich. Dies ermöglicht es, während einer Bremsung zumindest einen Anteil der kinetischen Energie des Fahrzeugs in elektrische Energie umzuwandeln und in einer Batterie zu speichern.

Das Schleppmoment der als Generator betriebenen elektrischen Maschine/n und damit die erreichbare Verzögerung kann hierbei aus verschiedenen Gründen begrenzt sein: Die in einem Kennfeld beschriebene Drehzahlabhängigkeit der Leistung einer elektrischen Maschine, wie insbesondere der Leistungsabfall bei niedrigen Drehzahlen führt dazu, dass z.B. bei Geschwindigkeiten unter 10 km/h kein Generatorbremsmoment mehr aufgebaut werden kann. Auch der mögliche Ladestrom der Batterie kann die erreichbare Leistung begrenzen. Besonders bei einer längeren Passabfahrt kann es auftreten, dass die Batterie vollgeladen ist und kein regeneratives Bremsen mehr möglich ist. Ferner muss eine thermische Überlastung von Leistungselektronik und/oder Batterie vermieden werden.

Wie allgemein bei Bremsvorgängen kann ein geringer Fahrbahnreibwert eine Bremsschlupfregelung erforderlich machen. Je nach Konfiguration der elektrischen Antriebe und insbesondere bei einem elektrischen Antrieb, der nur auf die Hinterachse wirkt, kann es zur Gewährleistung der Fahrstabilität erforderlich sein, das Generatorbremsmoment zu begrenzen. Das Erfordernis einer geeigneten Bremskraftverteilung ist besonders bei Bremsungen mit hoher Verzögerung gegeben. Auch die Getriebeübersetzung, falls der elektrische Antrieb über ein Getriebe mit den Rädern verbunden ist, kann die erreichbare Verzögerung begrenzen.

Um in jeder Situation eine ausreichende Verzögerung sicherzustellen, müssen die Fahrzeugräder also zusätzlich mit konventionellen Reibbremsen ausgestattet sein. Daher verwenden Hybridfahrzeuge und elektrische Fahrzeuge in der Regel ein regeneratives Bremssystem, welches das Gesamtbremsmoment bei einem normalem Bremsvorgang (ohne den Eingriff von Fahrstabilitätsregelungen) in zwei Anteile aufteilt: Ein Generatorbremsmoment, das durch den/die elektrischen Fahrzeugantrieb/e erzeugt wird und über den Antriebsstrang auf die Räder wirkt, und ein Reibungsbremsmoment, bei dem die kinetisehe Energie des Fahrzeugs durch Reibung der Bremsbeläge an der Bremsscheibe in Wärmeenergie umgewandelt wird. Dieser in Wärme umgewandelte Anteil der kinetischen Energie geht also bei dem Bremsvorgang über Reibung "verloren" und begrenzt den Wirkungsgrad der Rekuperation, weshalb ein möglichst hoher Anteil an Generatorbremsmoment angestrebt wird, um die Energierückgewinnung bei einem Bremsvorgang zu maximieren und damit den Verbrauch des Fahrzeugs an primärer Energie zu verringern. Ein beispielgemäßes regeneratives Bremssystem sowie ein entsprechendes Ansteuerverfahren ist in der DE 102011003346 A1 beschrieben.

Reibungsbremssysteme weisen vielfache elektronische Steuergeräte auf, welche durch Fahrstabilitätsregelungen die Fahrsicherheit erhöhen. Ein beispielgemäßes System zur Fahrstabilitätsregelung ist aus der EP 0792228 B1 bekannt.

Wenn bei einer Vollbremsung oder einer Bremsung auf Niedrigreibwert eine Bremsschlupfregelung (auch als ABS, d.h. Antiblockiersystem bekannt) eingreifen muss, um das Blockieren eines Rades zu vermeiden, so wirkt diese in der Regel nur auf den durch Reibbremsen erzeugten Anteil des Bremsmoments. Dies ist unter anderem darin begründet, dass die über einen Fahrzeugdatenbus (z.B. CAN-Bus) angeforderte Änderung eines Bremsmoments mit einer einen typischen Schlupfregelzyklus überschreitenden Zeitkonstante umgesetzt wird. Auch im Hinblick auf die Fahrstabilität bzw. die Beibehaltung einer geeigneten Bremskraftverteilung wird somit während einer ABS-Regelung üblicherweise kein Generatorbremsmoment gestellt.

Aus der WO2011/015422 A1 ist ein Verfahren zur Regelung eines Radbremsschlupfes für ein Fahrzeug mit einem Elektroantrieb bekannt, bei der ein Bremssignal mittels einer Schlupfregeleinrichtung erfasst wird, welche zum Regeln eines vorbestimmten Schlupfwertes ein Elektroantriebssignal und ein Reibungsbremssignal erzeugt. Das Elektroantriebssignal wird an eine Elektroantriebsregeleinrichtung übermittelt, welche den Elektroantrieb entsprechend zum Erzeugen eines Elektroantriebsdrehmoments betätigt, und das Reibungsbremssignal wird an eine Reibungsbremsregeleinrichtung übermittelt, welche eine Reibungsbremse des Rads entsprechend dem Reibungsbremssignal betätigt. Vorzugsweise wird eine hochdynamische Regelung des Elektroantriebsdrehmoments zumindest teilweise in der Elektroantriebsregeleinrichtung ausgeführt, wobei insbesondere eine Elektroantriebsdrehzahl erfasst und ausgewertet wird. Dadurch, dass die Schlupfregelung zumindest teilweise im Steuergerät des elektrischen Antriebs erfolgt, muss die Implementierung speziell an das aktuelle Fahrzeug angepasst.

Ein Bremssystem für ein Fahrzeug mit den Merkmalen vom Oberbegriff des unabhängigen Anspruchs 1 ist z.B. in AT 12 010 U2 oder DE 10 2009 030 816 A1 offenbart.

Es ist Aufgabe der vorliegenden Erfindung, ein Bremssystem bzw. ein Verfahren zur Steuerung eines Bremssystems bereitzustellen, welches eine schlupfgeregelte Bremsung ohne Beendigung der Rekuperation ermöglicht.

Diese Aufgabe wird durch das Bremssystem gemäß Anspruch 1 bzw. das Verfahren gemäß Anspruch 8 gelöst.

Es wird also ein Bremssystem für ein Kraftfahrzeug bereitgestellt, welches Reibungsbremsen an den Rädern zumindest einer Achse, welche von einer Reibungsbremsensteuereinrichtung angesteuert werden, mindestens eine elektrische Maschine, die mit mindestens einem Rad verbunden ist und von einer Elektroantriebssteuereinrichtung zumindest zeitweise als Generator angesteuert wird, Mittel zur Erfassung einer Verzögerungsanforderung, insbesondere einen Sensor zur Erfassung einer Bremspedalbetätigung, und eine Radschlupfregeleinrichtung umfasst. Das oder die Mittel zur Erfassung einer Verzögerungsanforderung ist/sind mit der Radschlupfregeleinrichtung verbunden, welche nach Maßgabe der Verzögerungsanforderung Sollbremsmomente für jedes Rad vorgibt, wobei die Radschlupfregeleinrichtung mit einer Momentenverteileinrichtung verbunden ist, welche mit der Reibungsbremsensteuereinrichtung und der Elektroantriebssteuereinrichtung verbunden ist und nach Maßgabe der Sollbremsmomente Reibungsbremsanforderungen an die Reibungsbremsensteuereinrichtung und Generatorbremsanforderungen an die Elektroantriebssteuereinrichtung vorgibt. Mit der Bezeichnung "verbunden" ist ein Signal- bzw. Informationsfluss gemeint, d.h. es kann sich sowohl um eine physikalische Verbindung, wie z.B. einen Draht, als auch um eine Softwareschnittstelle handeln.

Erfindungsgemäß wird der aktuelle Fahrzustand durch einen Zustandsbeobachter ermittelt, wobei der aktuelle Fahrzustand zumindest ein aktuelles Bremsmoment und zumindest eine der beiden Größen aktuelle Radgeschwindigkeit sowie aktueller Schlupf für jedes einzelne der Räder umfasst, und die Generatorbremsanforderung wird nach Maßgabe des aktuellen Bremsmoments ermittelt, wobei für ein Rad, welches mit einem Generator verbunden ist, die Reibungsbremsanforderung anhand eines Vergleichs des Sollbremsmoments mit der Generatorbremsanforderung ermittelt wird.

Die Radschlupfregeleinrichtung wird somit nicht erst bei Auftreten eines übermäßigen Radschlupfs aktiviert, sondern gibt in allen Fahrsituationen die Sollbremsmomente vor, welche von der Momentenverteileinrichtung auf die vorhandenen Bremssysteme aufgeteilt werden. Dies ermöglicht es bei, auch bei einem schlupfgeregelten Bremsvorgang ein regeneratives Bremsmoment zumindest teilweise aufrecht zu erhalten. Somit wird die Energierückgewinnung maximiert, wobei gleichzeitig die Stabilität des Fahrzeugs gewährleistet ist. Dies bedeutet einen erhöhten Komfort für den Fahrer, da keine Schwankungen in der Verzögerung auftreten, welche unter anderem durch die Deaktivierung eines Generators verursacht werden.

Ferner hat die erfindungsgemäße modulare Struktur den Vorteil, dass bei einer Änderung des Bremssystems die Schlupfregeleinrichtung unverändert beibehalten werden kann, während nur die Momentenverteileinrichtung angepasst werden muss. Dies verringert den Herstellungs- bzw. Adaptionsbedarf bei Serienfahrzeugen. Darüber hinaus ermöglicht es die vereinheitlichte Betrachtung der Gesamtmomente am Rad, auf eine Motorschleppmomentenregelung zu verzichten.

Zweckmäßigerweise ist die Radschlupfregeleinrichtung mit einem Zustandsbeobachter verbunden, welcher mit Sensoren zur Erfassung zumindest der Radgeschwindigkeiten jedes einzelnen Rads, der Gierrate und der Querbeschleunigung verbunden ist, wobei zumindest die momentan vorliegenden Bremsmomente an den einzelnen Rädern ermittelt und neben der Radgeschwindigkeiten bzw. dem Radschlupf des jeweiligen Rads bei der Vorgabe der Sollbremsmomente berücksichtigt werden. Auch weitere Fahrdynamikgrößen wie ein geschätzter Reibwert können der Radschlupfregeleinrichtung zugeführt und bei der Vorgabe der Sollbremsmomente berücksichtigt werden. Indem der Fahrzustand bei der Vorgabe der Sollbremsmomente berücksichtigt wird, kann z.B. eine Bremskraftverteilung zwischen Vorder- und Hinterachse angepasst werden, bevor sich ein übermäßiger Schlupf z.B. an einem von einem Generator gebremsten Hinterrad kommt. Reglerkonflikte zwischen einem Hybridmanager bzw. einem Elektroantriebsregler, der die Rekuperation maximiert, und der Radschlupfregelung werden vermieden.

Besonders zweckmäßig ist es, wenn das Bremssystem weiterhin eine Giermomentenregeleinrichtung aufweist, welche mit dem Zustandsbeobachter und einem Lenkwinkelsensor verbunden ist und die zumindest anhand des Lenkwinkels ermittelte Sollgierrate und eine gemessene Gierrate vergleicht, wobei nach Maßgabe des Vergleichsergebnisses radindividuelle Sollbremsmomente ermittelt und der Radschlupfregeleinrichtung zugeführt werden. Somit kann auch während einer Fahrdynamikregelung wie ESC eine Energierückgewinnung erfolgen. Weiterhin ist die Struktur des Bremssystems (bzw. des Steuergeräts) einfach und gut zu warten, da die mehrfache Implementierung im Wesentlichen gleicher Funktionalitäten vermieden wird.

Vorzugsweise ist die Momentenverteileinrichtung mit dem oder den Mitteln zur Erfassung einer Verzögerungsanforderung verbunden, wobei die Aufteilung zwischen Reibungsbremsanforderungen und Generatorbremsanforderungen unter Berücksichtigung der aktuellen Verzögerungsanforderung und/oder des aktuellen Blockierbremsmoments des jeweiligen Rades und/oder der Fahrgeschwindigkeit und/oder des Lenkradwinkels und/oder der Querbeschleunigung erfolgt. Wenn z.B. eine kritische Fahrsituation zu erwarten ist, kann die Momentenverteilung die für die vorgegebene Antriebskonfiguration optimale Aufteilung wählen.

Es ist vorteilhaft, wenn die Motorsteuereinrichtung das/die aktuell aufgebrachte/n Generatorbremsmoment/e und/oder das/die maximal erzeugbare/n Generatorbremsmoment/e an die Momentenverteileinrichtung sendet und die Aufteilung zwischen Reibungsbremsanforderungen und Generatorbremsanforderung/en unter Berücksichtigung des/der aktuell aufgebrachten und/oder maximal erzeugbaren Generatorbremsmoment/e erfolgt. Somit kann die vorhandene Regenerationskapazität, d.h. die mögliche Rückgewinnung durch den Generator, bestmöglich ausgenutzt werden.

Gemäß einer bevorzugten Ausführungsform der Erfindung umfassen die Mittel zur Erfassung einer Verzögerungsanforderung weiterhin eine Schnittstelle zu einem Fahrzeugdatenbus, über den ein elektronisches Steuergerät, welches insbesondere mit einem oder mehreren Umfeldsensoren verbunden ist, eine Verzögerungsanforderung sendet. Die erfindungsgemäße Struktur der Radschlupfregelung ist für eine externe Anforderungen transparent und stellt eine sauber definierte Schnittstelle bereit, über die beispielsweise ein Notbremsassistent, welcher anhand Umfeldsensorik ein Hindernis erkennt, eine Vollbremsung anfordern kann.

Zweckmäßigerweise sind die Reibungsbremsensteuereinrichtung, die Radschlupfregeleinrichtung und die Momentenverteileinrichtung in einem elektronischen Steuergerät integriert und vorzugsweise ganz oder teilweise als von einer Recheneinheit des elektronischen Steuergeräts ausgeführter Programmcode implementiert. Es bietet sich an, die Radschlupfregelung mittels eines elektronischen Steuergeräts eines Reibungsbremssystems durchzuführen, welches hydraulische Radbremsen und/oder auf Reibung basierende elektromechanische Radbremsen ansteuert.

Die Erfindung betrifft weiterhin ein Verfahren zur Steuerung eines Bremssystems für ein Kraftfahrzeug, welches Reibungsbremsen an den Rädern zumindest einer Achse und mindestens eine elektrische Maschine umfasst, die mit mindestens einem Rad verbunden ist und als Generator betrieben werden kann. Das erfindungsgemäße Verfahren umfasst die Schritte

- Ermitteln des aktuellen Fahrzustands durch einen Zustandsbeobachter, wobei der aktuelle Fahrzustand zumindest das aktuelle Bremsmoment und zumindest eine der beiden Größen aktuelle Radgeschwindigkeit sowie aktueller Schlupf für jedes einzelne der Räder umfasst
- Ermitteln von radindividuellen Sollbremsmomenten anhand einer Verzögerungsanforderung unter Berücksichtigung des aktuellen Fahrzustands
- Aufteilen der Sollbremsmomente für die einzelnen Räder in Reibungsbremsanforderungen und Generatorbremsanforderung/en
- Betätigen der Reibungsbremsen gemäß der Reibungsbremsanforderungen und Betreiben der elektrischen Maschine gemäß der/den Generatorbremsanforderung/en.

Dadurch, dass der Fahrzustand bereits bei der Vorgabe der Sollbremsmomente berücksichtigt wird, kann das Auftreten übermäßigen Radschlupfs in manchen Fällen bereits im Vorfeld vermieden werden. Die Beibehaltung einer Generatorbremsung auch während einer Schlupfregelung erhöht den Wirkungsgrad der Rekuperation.

Erfindungsgemäß wird die Generatorbremsanforderung nach Maßgabe des aktuellen Bremsmoments ermittelt, wobei für ein Rad, welches mit einem Generator verbunden ist, die Reibungsbremsanforderung anhand eines Vergleichs des Sollbremsmoments mit der Generatorbremsanforderung ermittelt wird. Somit wird ein konsistentes Bremsverhalten des Fahrzeugs gewährleistet.

Wenn eine erste elektrische Maschine mit mindestens zwei Rädern verbunden ist, so ist es besonders vorteilhaft, die Generatorbremsanforderung an die erste elektrische Maschine als ein vorgegebener Anteil des minimalen aktuellen Bremsmoments der gekoppelten Räder zu wählen.

Wenn mindestens einem Rad eine elektrische Maschine zugeordnet ist, welche mit keinem anderen Rad verbunden ist, wird die Generatorbremsanforderung an die zugeordnete Maschine zweckmäßigerweise anhand einer vom geschätzten Reibwert $\mu$ abhängigen Kennlinie $K(\mu)$ ermittelt, vorzugsweise gemäß der Beziehung $K(\mu) \cdot C \cdot M_{Rad}$ mit einer Konstante $C$ und dem aktuellen Bremsmoment $M_{Rad}$ an dem betrachteten Rad. Durch die vorher z.B. in Fahrversuchen ermittelte Kennlinie kann eine optimale Verteilung mit geringem Rechenaufwand während der Fahrt durch ein Steuergerät umgesetzt werden.

Weitere bevorzugte Ausführungsformen ergeben sich aus den Unteransprüchen und der nachfolgenden Beschreibung eines Ausführungsbeispiels an Hand von Figuren.

Es zeigen

Fig.1 ein schematisch dargestelltes Ausführungsbeispiel des erfindungsgemäßen Bremssystems,

Fig. 2(a) eine beispielhafte Bremsung eines Fahrzeugs mit Bremsschlupfregelung nach dem Stand der Technik, und

Fig. 2(b) eine beispielhafte Bremsung eines Fahrzeugs mit fortgesetzter Rekuperation während einer Bremsschlupfregelung.

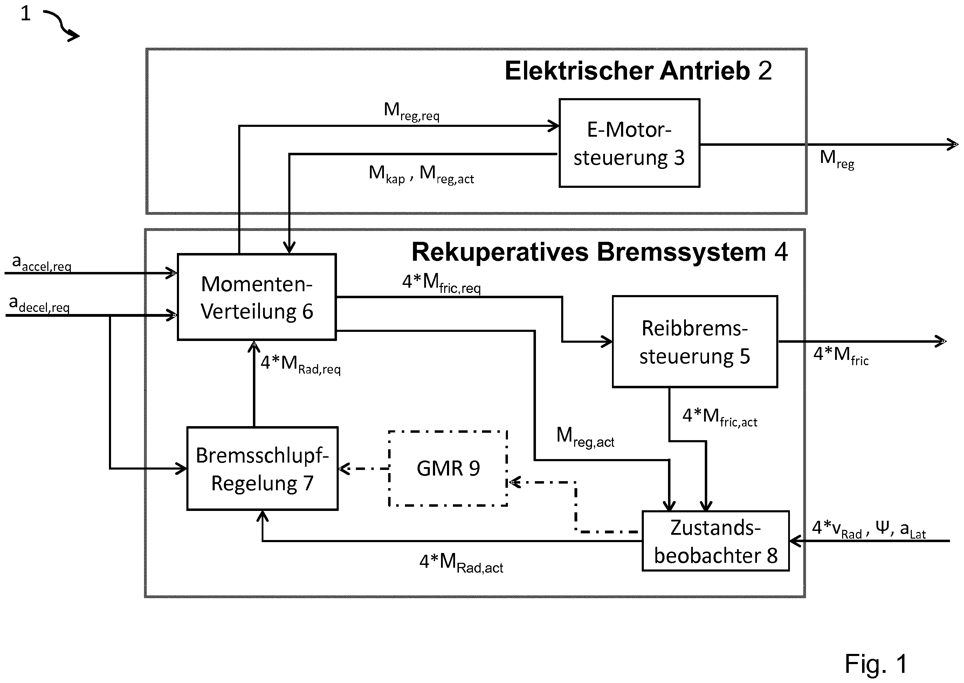

Das in Fig. 1 dargestellte Ausführungsbeispiel zeigt die Teilsysteme für eine regenerative Bremsung mit Schlupfregelung und den Informationsaustausch zwischen den Teilsystemen. Rechtecke geben hierbei einzelne Systeme bzw. Funktionseinheiten an, während Verbindungen zwischen den Systemen durch Pfeile dargestellt sind, welche auch die Richtung des Signal- bzw. Informationsflusses angeben und über Bezeichner die entsprechende Größe andeuten.

Ein regeneratives Bremssystem 1 umfasst also folgende Teilsysteme:

Einen elektrischen Antrieb 2, der von eine E-Motorsteuerung bzw. einer Elektroantriebssteuereinrichtung 3 angesteuert wird, um ein Generatorbremsmoment $M_{reg}$ oder, im Fall einer gewünschten Beschleunigung, ein Antriebsmoment an einem oder mehreren Rädern aufzubringen, und
ein rekuperatives Bremssystem 4, welches Reibungsbremsen und eine Reibbremssteuerung bzw. eine Reibungsbremsensteuereinrichtung 5, sowie eine (auch als Torque Splitter bezeichnete) Momentenverteilung bzw. Momentenverteileinrichtung 6 welche ein "Blending" bzw. ein vorzugsweise stufenloses Überblenden zwischen regenerativer Bremsung und reiner Reibungsbremsung ermöglicht, und ferner eine Bremsschlupfregelung bzw. eine Radschlupfregeleinrichtung 7, welche die Sollbremsmomente der einzelnen Räder regelt und das Auftreten eines übermäßigen Bremsschlupfs verhindert.

Bei einem Bremsvorgang wird das vom Fahrer angeforderte Gesamtbremsmoment $M_{Brems}$ bzw. die Verzögerungsanforderung $a_{decel,req}$ aus der Bremspedalbetätigung ermittelt, indem z.B. ein Sensor den Betätigungsweg, den Pedalwinkel oder die vom Fahrer ausgeübte Pedalkraft misst. Die Verzögerungsanforderung wird als Eingangssignal für die regenerative Bremsung benutzt, d.h. ein Mittel zur Erfassung einer Verzögerungsanforderung, insbesondere ein Sensor zur Erfassung einer Bremsbetätigung durch den Fahrer, wie z.B. ein Pedalwinkelsensor oder Wegsensor am Hauptbremszylinder, ist mit der Bremsschlupfregelung 7 verbunden. Die Bremsschlupfregelung 7 ermittelt aus der Verzögerungsanforderung Sollbremsmomente $M_{Rad,req}$ für die einzelnen Räder. Während bei einer schwachen Bremsung auf hohem Reibwert die Verzögerungsanforderung beispielsweise gemäß einer vorgegebenen Bremskraftverteilung durch das Fahrzeug umsetzbar ist, kann es bei einem starken Bremsvorgang (insbesondere einer Vollbremsung mit einer Verzögerung von 1g, welche der Erdbeschleunigung entspricht) oder bei einem geringen Fahrbahnreibwert erforderlich sein, die Bremsmomente der einzelnen Räder zu regulieren, um das Blockieren der Räder zu verhindern.
Um einen entsprechenden Regelbedarf zu erkennen, benötigt die Bremsschlupfregelung 7 zahlreiche Informationen zum Fahrdynamikzustand des Fahrzeugs, wie beispielsweise Fahrgeschwindigkeit, aktuelle Längs- und/oder Querbeschleunigung, Lenkradwinkel, Gierrate, Stabilitätsindex, Blockiermomente der einzelnen Räder und den Reibwert der Fahrbahn (ggfs. auch an den einzelnen Rädern). Daher ist die Radschlupfregeleinrichtung 7 mit einem Zustandsbeobachter 8 verbunden, der Signale mehrerer Sensoren empfängt und daraus zumindest die aktuellen Radbremsmomente $M_{Rad,act}$ berechnet. Bei den mit einem elektrischen Antrieb verbundenen Rädern setzt sich das Radbremsmoment also jeweils aus einem aktuellen Generatorbremsmoment $M_{reg,act}$ und einem aktuellen Reibungsbremsmoment $M_{fric,asct}$ zusammen. Zweckmäßigerweise ist der Zustandsbeobachter 8 zumindest mit einem Raddrehzahlsensor für jedes Rad, der die aktuelle Radgeschwindigkeit $v_{Rad}$ angibt, einem Sensor zur Messung der Gierrate $\dot{\Psi}$ und einem Sensor zur Messung der Querbeschleunigung $a_{Lat}$ verbunden. Mit diesen Informationen kann abgeleitet werden, welches Bremsmoment jedes Rad mindestens aufnehmen werden kann, ohne die Stabilität des Rades oder des Fahrzeugs zu gefährden. Gleichzeitig kann somit verhindert werden, dass während einer Bremsschlupfregelung ein kleineres Sollbremsmoment als dieses umsetzbare Bremsmoment angefordert wird.
Gemäß einer bevorzugten Ausführungsform der Erfindung wird der Zustandsbeobachter auch für eine Fahrdynamikregelung 9 herangezogen, insbesondere eine Giermomentenregelung **GMR**. Ferner können weitere Fahrzeugregelsysteme wie eine Überrollverhinderung (auch als Active Rollover Protection bzw. ARP bekannt) oder Fahrerassistenzsysteme Vorgaben für Bremsmomente ermitteln. Die verschiedenen Sollbremsmomente werden dann zweckmäßigerweise einer Arbitriereinrichtung zugeführt, welche anhand vorgegebener Regeln entscheidet, welche Bremsmomentenvorgabe an die Radschlupfregelung gesendet und somit von dieser umgesetzt wird.
Die von der Bremsschlupfregelung 7 ermittelten Sollbremsmomente $M_{Rad,req}$ werden an die auch als Torque-Splitter bezeichnete Momentenverteilung 6 weitergeleitet, die daraus unter Berücksichtigung des Antriebsstrangkonzepts Generatorbremsmomentanforderungen $M_{reg,req}$ und Reibungsbremsanforderungen $M_{fric,req}$ ermittelt, also das Gesamtbremsmoment entsprechend auf den elektrischen Antrieb 2 und die Reibungsbremsen verteilt.
Der elektrische Antrieb 2 weist mindestens eine elektrische Maschine auf, welche nach Maßgabe der E-Motorsteuerung 3 ein Generatorbremsmoment oder ein Antriebsmoment aufbringt. Bei der elektrischen Maschine kann es sich um einen Zentralmotor handeln, der gleichermaßen auf alle Räder einer Achse oder des gesamten Fahrzeugs wirkt, oder um radindividuelle Elektromotoren, insbesondere Radnabenmotoren. An den mit einer elektrischen Maschine verbundenen Antriebsrädern kann also ein Generatorbremsmoment erzeugt werden, um die kinetische Energie des Fahrzeugs aufzunehmen und in elektrische Energie umzuwandeln. Die E-Motorsteuerung 3 kann weiterhin anhand der Eigenschaften der elektrischen Maschine/n und der Batterie (insbesondere dem Füllstand **S.O.C.** der Batterie) die maximal möglichen Generatorbremsmomente, also die so genannte Regenerationskapazität $M_{Kap}$ abschätzen. Die aktuell umgesetzten Generatorbremsmomente $M_{reg,act}$ sowie die Regenerationskapazität $M_{Kap}$ wird von den E-Motorsteuerung 3 ständig an das rekuperative Bremssystem 4 weitergeleitet und von der Momentenverteilung 6 berücksichtigt.
Im Folgenden wird die vom Torque-Splitter vorgenommene Momentenverteilung zwischen Reibungsbremse und Generator näher erläutert. Die Generatorbremsanforderung $M_{reg}$ und somit auch die Verteilung sind abhängig vom Antriebskonzept.

Wenn zwei oder mehr Räder mit einem einzelnen elektrischen Antrieb verbunden sind, so kann die Generatorbremsanforderung pro Rad ($M_{reg,i}$) aus den aktuellen Radbremsmomenten $M_{Rad,i}$ abgeleitet werden, so dass das minimale Radbremsmoments aller gekoppelten Räder multipliziert mit einem Faktor **K** von beispielsweise 0,5 bis 0,8 als Generatorbremsmoment angefordert werden.

Wenn das Generatorbremsmoment radindividuell eingestellt werden kann (z.B. bei Radnabenmotoren), ist eine Generatorbremsanforderung von $K*C*M_{Rad}$ zweckmäßig, mit $K=Fkt(\mu)$, wobei $\mu$ den Reibbeiwert zwischen Rad und Straße berücksichtigt und **C** eine Konstante ist.

Prinzipiell können verschiedene Strategien zur Aufteilung des Sollbremsmoments in eine Generatorbremsanforderung und eine Reibungsbremsanforderung (welche dann durch angesteuerte Aktoren in entsprechende Momente umgesetzt werden) verfolgt. Im Hinblick darauf, auch eine Beschleunigungsanforderung $a_{accel,req}$ vereinheitlicht betrachten zu können, ist eine Bilanzierung des Gesamtmoments am jeweiligen Rad $M_{Rad}$ sowie am Fahrzeug $M_{total}$ als Summe der einzelnen Radmomente vorteilhaft. Hierbei kann es zweckmäßig sein, ein Generatorsollbremsmoment $M_{Gen}$ als Zwischengröße zu ermitteln und dieses dann unter Berücksichtigung der Antriebsstrangkonfiguration auf die einzelnen Generatoren zu verteilen. Hierbei betrachtet die Momentenverteileinrichtung gleichzeitig die Regenerationskapazität $M_{Kap}$ als Summe möglicher Generatorbremsmomente und das berechnete Generatorsollbremsmoment $M_{Gen}$, um die Anforderungen an den Antriebstrang $M_{reg,req}$ und an das Reibungsbremssystem $M_{fric,req}$ zu stellen. Dabei gelten folgende Beziehungen:

$$M_{total} = M_{reg,req} + M_{fric,req}$$

$$M_{Limit} = \min\left(M_{Kap}, M_{Gen}\right)$$

$$M_{Reg,Req} \leq M_{Limit}$$

Die angeforderte Verzögerung bzw. das entsprechende Gesamtbremsmoment ergibt sich aus der Summe von Generatorbremsanforderung und Reibungsbremsanforderung. Wenn das Generatorsollbremsmoment (welches z.B. anhand des aktuell vorliegenden Gesamtmoments ermittelt wurde) die maximale Regenerationskapazität übersteigt, so wird das Generatorsollbremsmoment entsprechend begrenzt. Wenn dies z.B. im Hinblick auf eine zu erwartende kritische Fahrsituation sinnvoll erscheint (z.B. um eine optimale Bremskraftverteilung zu erreichen), kann die Generatorbremsanforderung gegenüber dem limitierten Generatorsollbremsmoment $M_{Limit}$ weiter verringert werden.

Wenn das Fahrzeug ein radlokales E-Motorkonzept bzw. einen Antriebsstrang mit einem individuellen Motor (insbesondere Radnabenmotor) an jedem Antriebsrad aufweist, ist es zweckmäßig, jedes Antriebsrad individuell zu betrachten. Dann wird jedem Antriebsrad ein Generatorsollbremsmoment $M_{Gen,i}$ zugeordnet. Das Gesamtgeneratorsollbremsmoment $M_{Gen}$ lässt sich aus der einzelnen Radgeneratorsollbremsmomente $M_{Gen,i}$ zusammensetzen:

$$M_{Gen} = \sum M_{Gen,i}$$

Falls das Fahrzeug nur eine Antriebsachse besitzt oder jede Antriebsachse einen gemeinsamen Elektromotor für beide Räder aufweist, dann wird das Regensollbremsmoment $M_{Gen,A}$ der betrachteten Antriebsachse zweckmäßigerweise durch das Antriebsrad mit dem kleineren Regensollbremsmoments $M_{Gen,i}$ wie folgt bestimmt (hier ist mit l bzw. r das linke bzw. rechte Rad angedeutet):

$$M_{Gen,A} = 2 \cdot \min(M_{Gen,l}, M_{Gen,r})$$

Für Fahrzeuge mit Vierradantrieb und einem zentralen Elektromotor müssen zuerst die Regensollbremsmomente $M_{Gen,A}$ für die Vorderachse (mit dem Index VA bezeichnet) und Hinterachse (Index HA)getrennt wie oben berechnet werden.

Falls der Zentralantrieb eine variable Momentverteilung zwischen Vorderachse und Hinterachse besitzt, dann ist das Gesamtgeneratorsollbremsmoment $M_{Gen}$ die Summe der zwei Generatorsollbremsmomente an den beiden Achsen:

$$M_{Gen} = M_{Gen,VA} + M_{Gen,HA}$$

Falls der Zentralantrieb eine feste Momentverteilung k zwischen Vorderachse und Hinterachse besitzt, dann gilt folgende Beziehung zwischen dem Gesamtgeneratorsollbremsmoment $M_{Gen}$ und den zwei Generatorsollbremsmomenten der beiden Achsen:

$$M_{Gen} = \min(M_{Gen,VA}, M_{Gen,HA}/k) + \min(k \cdot M_{Gen,VA}, M_{Gen,HA})$$

Somit können bei einem radlokalen Konzept Generatorsollbremsmomente direkt für die Bestimmung der Generatorbremsanforderungen übernommen werden, während bei Konzepten mit einem zentralen Elektromotor, der jeweils einer Achse bzw. allen Rädern zugeordnet ist, eine achsweise Minimalarbitration der Generatorbremsmomente der einzelnen Räder für die Vorder und/oder Hinterachse erfolgen muss.

Dadurch, dass die Antriebskonfiguration erst bei der Momentenverteilung betrachtet werden muss, besteht eine transparente Schnittstelle zu der Bremsschlupfregelung bzw. weiteren Fahrstabilitäts- oder Fahrerassistenzfunktionen, die eine Fahrzeugverzögerung bzw. radindividuelle Bremsmomente anfordern. Änderungen der Antriebskonfiguration wirken sich nur auf die Momentenverteileinrichtung und nicht auf übergeordnete Funktionen aus.

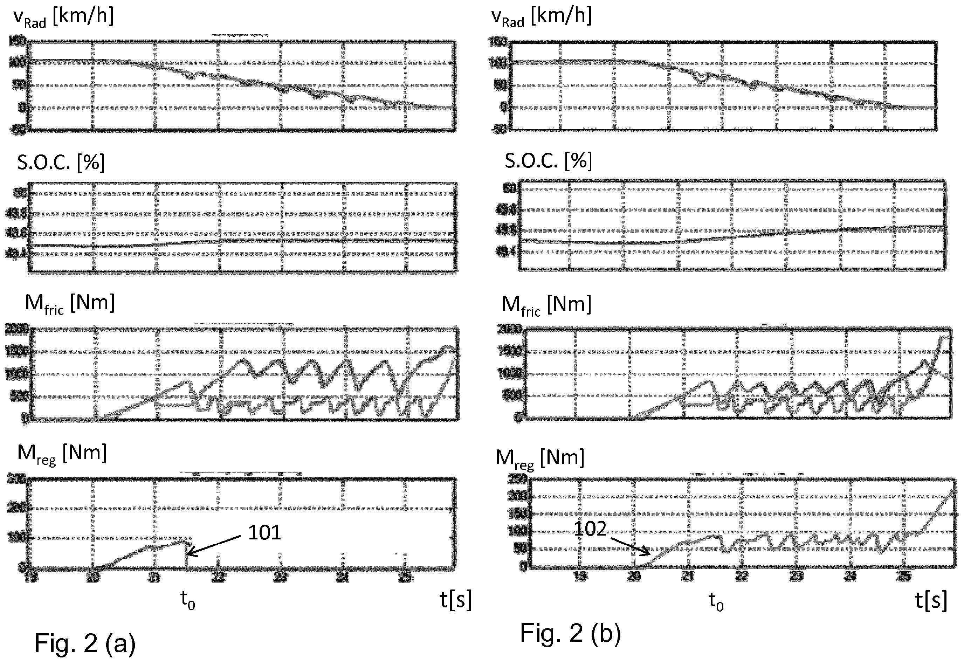

In Fig. 2 ist der zeitliche Verlauf einer beispielhaften Bremsung mit Bremsschlupfregelung dargestellt, wobei Fig. 2(a), d.h. die linke Spalte, eine Bremsung nach dem Stand der Technik zeigt, während Fig. 2(b), d.h. die rechte Spalte, eine Bremsung nach dem erfindungsgemäßen Verfahren / mit einem erfindungsgemäßen Bremssystem zeigt. Die oberste Zeile zeigt die Radgeschwindigkeit $v_{Rad}$, während in der zweiten Zeile der Ladezustand **S.O.C.** der Batterie dargestellt ist. Die dritte bzw. vierte Zeile zeigen das Reibungsbremsmoment $M_{fric}$ bzw. das Generatorbremsmoment $M_{reg}$.

Am Anfang der vorhergegangenen Beschleunigungsphase war der Ladezustand (S.O.C.) der Batterie bei 50%. Wird die Rekuperation, wie in Linie 101 dargestellt, zum Zeitpunkt $t_0$ bzw. beim Eintritt in die ABS-Regelung abgebrochen, ist der Anteil der rückgeführten Energie mit ca. 15% der verbrauchten Energie gering. Der hier gezeigte langsame Antritt der Bremse weist in diesem Fall eine Rekuperationsphase von 1,5 Sekunden. Wenn die Rekuperation während der Bremsschlupfregelung mit einem geregelten Generatorsollbremsmoment beibehalten wird, wie in Linie 102 gezeigt, so erhöht sich der Anteil der rekuperierten Energie auf etwa 34% der im Beschleunigungsvorgang verbrauchten Energie.

Neben einer erhöhten Energierückgewinnung hat dies den Vorteil, dass der Bremsdruck an der Antriebsachse während der Bremsschlupfregelung mit Rekuperation um die Hälfte niedriger ist gegenüber dem Fall ohne Rekuperation. Die Druckmodulation der Reibungsbremse hat sichtbar kleinere Amplituden, wenn durch das rekuperative Bremssystem Generatorbremsanforderungen berechnet werden, d.h. der elektrische Antrieb einen Teil der Regelaufgabe mit erfüllt. Neben einem Komfortgewinn aufgrund weniger Pedalrückwirkungen und Aktivität der Hydraulikpumpe hat dies hat weiterhin den Vorteil, dass auch die Schlupfamplituden kleiner werden bzw. die Radgeschwindigkeiten weniger stark vom gewünschten Verhalten abweichen.

Der Vorteil eines Bremsschlupfregelung unter Einbeziehung des elektrischen Antriebs lässt sich mit Radnabenmotoren im Regelkonzept optimieren. Speziell, wenn der Radnabenmotor schnell zu regeln ist, kann diese Strategie zu einer verbesserten ABS-Regelung führen. Der E-Motor kann bei hohen Schlupfeinläufen (z.B. Pedalantritt bei Low-μ, d.h. niedrigem Reibwert) das Rad durch aktives Antreiben ähnlich einer Motor-Schleppmomentenregelung schneller als die Reibungsbremse in einen optimalen Verzögerungsschlupfbereich führen. Hierbei muss die vom ABS berechnete Fahrzeugreferenzgeschwindigkeit die Motorsteuersignale geeignet berücksichtigen, um keine fälschliche Stabilitätsphase des Rades zu erkennen, denn die Referenzberechnung interpretiert eine Verlangsamung der Rücklaufgeschwindigkeit des Rades als Annäherung an die Fahrzeuggeschwindigkeit.

Mit dem erfindungsgemäßen Bremssystem bzw. dem erfindungsgemäßen Verfahren kann also sichergestellt werden, dass eine Bremsschlupfregelung auch bei einem zumindest teilweise elektrisch angetriebenen Fahrzeug erfolgen kann, ohne dass die Rekuperation vollständig beendet werden muss. Neben einer verbesserten Energieeffizienz führt dies auch zu einem erhöhten Komfort für den Fahrer, da die Beendigung der Rekuperation häufig als unkomfortable Beschleunigung während eines Bremsvorgangs empfunden wird. Die vereinheitlichte Betrachtung des Radgesamtmoments in allen Fahrsituationen vereinfacht das Gesamtkonzept. Wenn die Berechnung des Sollbremsmoments auch im Nichtregelfall durch die Bremsschlupfregelung erfolgt, können durch eine angepasste Verteilung zwischen Generator und Reibungsbremse häufig hydraulische Eingriffe vermieden werden, die aufgrund der Pedalrückwirkung und des Geräuschs der Pumpe komfortmindernd wirken.

**Patentansprüche**

1. Bremssystem für ein Kraftfahrzeug, umfassend Reibungsbremsen an den Rädern zumindest einer Achse, welche von einer Reibungsbremsensteuereinrichtung (5) angesteuert werden, mindestens eine elektrische Maschine, die mit mindestens einem Rad verbunden ist und von einer Elektroantriebssteuereinrichtung (3) zumindest zeitweise als Generator angesteuert wird, Mittel zur Erfassung einer Verzögerungsanforderung ($a_{decel,req}$), insbesondere einen Sensor zur Erfassung einer Bremspedalbetätigung, und eine Radschlupfregeleinrichtung (7), wobei das oder die Mittel zur Erfassung einer Verzögerungsanforderung ($a_{de-cel,req}$) mit der Radschlupfregeleinrichtung (7) verbunden ist, welche nach Maßgabe der Verzögerungsanforderung ($a_{decel,req}$) Sollbremsmomente ($M_{Rad,req}$) für jedes Rad vorgibt, wobei die Radschlupfregeleinrichtung (7) mit einer Momentenverteileinrichtung (6) verbunden ist, welche mit der Reibungsbremsensteuereinrichtung (5) und der Elektroantriebssteuereinrichtung (3) verbunden ist und nach Maßgabe der Sollbremsmomente ($M_{Rad,req}$) Reibungsbremsanforderungen ($M_{fric,req}$) an die Reibungsbremsensteuereinrichtung (5) und Generatorbremsanforderungen ($M_{reg,req}$) an die Elektroantriebssteuereinrichtung (3) vorgibt, **dadurch gekennzeichnet, dass** der aktuelle Fahrzustand durch einen Zustandsbeobachter (8) ermittelt wird, wobei der aktuelle Fahrzustand zumindest ein aktuelles Bremsmoment ($M_{Rad}$) und zumindest eine der beiden Größen aktuelle Radgeschwindigkeit ($v_{Rad}$) sowie aktueller Schlupf für jedes einzelne der Räder umfasst, und dass die Generatorbremsanforderung ($M_{reg,req}$) nach Maßgabe des aktuellen Bremsmoments ($M_{Rad}$) ermittelt wird, wobei für ein Rad, welches mit einem Generator verbunden ist, die Reibungsbremsanforderung ($M_{fric,req}$) anhand eines Vergleichs des Sollbremsmoments ($M_{Rad,req}$) mit der Generatorbremsanforderung ($M_{reg,req}$) ermittelt wird.

2. Bremssystem nach Anspruch 1, **dadurch gekennzeichnet, dass** die Radschlupfregeleinrichtung (7) mit einem Zustandsbeobachter (8) verbunden ist, welcher mit Sensoren zur Erfassung zumindest der Radgeschwindigkeiten ($v_{Rad}$) jedes einzelnen Rads, der Gierrate ($\dot{\Psi}$) und der Querbeschleunigung ($a_{Lat}$) verbunden ist, wobei zumindest die momentan vorliegenden Bremsmomente ($M_{Rad,act}$) an den einzelnen Rädern ermittelt und bei der Vorgabe der Sollbremsmomente ($M_{Rad,req}$) berücksichtigt werden.

3. Bremssystem nach Anspruch 2, **gekennzeichnet durch** eine Giermomentenregeleinrichtung (9), welche mit dem Zustandsbeobachter (8) und einem Lenkwinkelsensor verbunden ist und die zumindest anhand des Lenkwinkels ermittelte Sollgierrate und eine gemessene Gierrate vergleicht, wobei nach Maßgabe des Vergleichsergebnisses radindividuelle Sollbremsmomente ($M_{Rad,req}$) ermittelt und der Radschlupfregeleinrichtung (7) zugeführt werden.

4. Bremssystem nach mindestens einem der Ansprüche 1 bis 3, **dadurch gekennzeichnet, dass** die Momentenverteileinrichtung (6) mit dem oder den Mitteln zur Erfassung einer Verzögerungsanforderung verbunden ist und die Aufteilung zwischen Reibungsbremsanforderungen ($M_{fric,req}$) und Generatorbremsanforderungen ($M_{reg,req}$) unter Berücksichtigung der aktuellen Verzögerungsanforderung ($a_{decel,req}$) und/oder des aktuellen Blockierbremsmoments des Rades und/oder der Fahrgeschwindigkeit und/oder des Lenkradwinkels und/oder der Querbeschleunigung ($a_{Lat}$) erfolgt.

5. Bremssystem nach mindestens einem der Ansprüche 1 bis 4, **dadurch gekennzeichnet, dass** die Elektroantriebssteuereinrichtung (3) das/die aktuell aufgebrachte/n Generatorbremsmoment/e ($M_{reg,act}$) und/oder das/die maximal erzeugbare/n Generatorbremsmoment/e ($M_{kap}$) an die Momentenverteileinrichtung (6) sendet und die Aufteilung zwischen Reibungsbremsanforderungen ($M_{fric,req}$) und Generatorbremsanforderung/en ($M_{reg,req}$) unter Berücksichtigung des/der aktuell aufgebrachten und/oder maximal erzeugbaren Generatorbremsmoment/e ($M_{kap}$) erfolgt.

6. Bremssystem nach mindestens einem der Ansprüche 1 bis 5, **dadurch gekennzeichnet, dass** die Mittel zur Erfassung einer Verzögerungsanforderung weiterhin eine Schnittstelle zu einem Fahrzeugdatenbus umfassen, über den ein elektronisches Steuergerät, welches insbesondere mit einem oder mehreren Umfeldsensoren verbunden ist, eine Verzögerungsanforderung sendet.

7. Bremssystem nach mindestens einem der Ansprüche 1 bis 6, **dadurch gekennzeichnet, dass** die Reibungsbremsensteuereinrichtung (5), die Radschlupfregeleinrichtung (7) und die Momentenverteileinrichtung (6) in einem elektronischen Steuergerät integriert sind und vorzugsweise ganz oder teilweise als von einer Recheneinheit des elektronischen Steuergeräts ausgeführter Programmcode implementiert sind.

8. Verfahren zur Steuerung eines Bremssystems für ein Kraftfahrzeug, insbesondere nach einem der Ansprüche 1 bis 7, welches Reibungsbremsen an den Rädern zumindest einer Achse und mindestens eine elektrische Maschine umfasst, die mit mindestens einem Rad verbunden ist und als Generator betrieben werden kann, umfassend die Schritte

Ermitteln des aktuellen Fahrzustands durch einen Zustandsbeobachter (8), wobei der aktuelle Fahrzustand zumindest das aktuelle Bremsmoment ($M_{Rad}$) und zumindest eine der beiden Größen aktuelle Radgeschwindigkeit ($v_{Rad}$) sowie aktueller Schlupf für jedes einzelne der Räder umfasst

Ermitteln von radindividuellen Sollbremsmomenten ($M_{Rad,req}$) anhand einer Verzögerungsanforderung unter Berücksichtigung des aktuellen Fahrzustands

Aufteilen der Sollbremsmomente ($M_{Rad,req}$) für die einzelnen Räder in Reibungsbremsanforderungen ($M_{fric,req}$) und Generatorbremsanforderung/en, ($M_{reg,req}$) wobei die Generatorbremsanforderung ($M_{reg,req}$) nach Maßgabe des aktuellen Bremsmoments ($M_{Rad}$) ermittelt wird und für ein Rad, welches mit einem Generator verbunden ist, die Reibungsbremsanforderung ($M_{fric,req}$) anhand eines Vergleichs des Sollbremsmoments mit der Generatorbremsanforderung ($M_{reg,req}$) ermittelt wird.

Betätigen der Reibungsbremsen gemäß der Reibungsbremsanforderungen ($M_{fric,req}$) und Betreiben der elektrischen Maschine gemäß der/den Generatorbremsanforderung/en ($M_{reg,req}$).

9. Verfahren gemäß Anspruch 8, **dadurch gekennzeichnet, dass** eine erste elektrische Maschine mit mindestens zwei Rädern verbunden ist, und dass die Generatorbremsanforderung ($M_{reg,req}$) an die erste elektrische Maschine als ein vorgegebener Anteil des minimalen aktuellen Bremsmoments ($M_{Rad}$) der gekoppelten Räder gewählt wird.

10. Verfahren gemäß Anspruch 8, **dadurch gekennzeichnet, dass** mindestens einem Rad eine elektrische Maschine zugeordnet ist, welche mit keinem anderen Rad verbunden ist, und dass die Generatorbremsanforderung ($M_{reg,req}$) an die zugeordnete Maschine anhand einer vom geschätzten Reibwert $\mu$ abhängigen Kennlinie $K(\mu)$ ermittelt wird, vorzugsweise gemäß der Beziehung $K(\mu) \cdot C \cdot M_{Rad}$ mit einer Konstante $C$ und dem aktuellen Bremsmoment $M_{Rad}$ an dem betrachteten Rad.

## Claims

1. Brake system for a motor vehicle comprising friction brakes on the wheels of at least one axle, which friction brakes are actuated by a friction brake control device (5), at least one electric machine which is connected to at least one wheel and is actuated at least at times as a generator by an electric drive control device (3), means for detecting a deceleration request ($a_{decel,req}$), in particular a sensor for detecting activation of a brake pedal, and a wheel slip control device (7), wherein the means for detecting a deceleration request ($a_{decel,req}$) is/are connected to the wheel slip control device (7) which predefines setpoint braking torques ($M_{wheel,req}$) for each wheel in accordance with the deceleration request ($a_{decel,req}$), wherein the wheel slip control device (7) is connected to a torque distribution device (6) which is connected to the friction brake control device (5) and the electric drive control device (3) and, in accordance with the set point braking torques ($M_{wheel,req}$), predefines friction braking requests ($M_{fric,req}$) to the friction brake control device (5) and generator braking requests ($M_{reg,req}$) to the electric drive control device (3), **characterized in that** the current driving state is determined by means of a state observer (8), wherein the current driving state comprises at least a current braking torque ($M_{wheel}$) and at least one of the two variables of the current wheel speed ($V_{wheel}$) and current slip for each individual wheel and **in that** the generator braking request ($M_{reg,req}$) is determined in accordance with the current braking torque ($M_{wheel}$), wherein for a wheel which is connected to a generator the friction braking request ($M_{fric,req}$) is determined on the basis of a comparison of the setpoint braking torque ($M_{wheel,req}$) with the generator braking request ($M_{reg,req}$).

2. Brake system according to Claim 1, **characterized in that** the wheel slip control device (7) is connected to a state observer (8) which is connected to sensors for sensing at least the wheel speeds ($V_{wheel}$) of each individual wheel, the yaw rate ($\dot{\Psi}$) and the lateral acceleration ($a_{lat}$), wherein at least the instantaneously present braking torques ($M_{wheel,inst}$) at the individual wheels are determined and taken into account in the predefinition of the setpoint braking torques ($M_{wheel,req}$).

3. Brake system according to Claim 2, **characterized by** a yawing moment control device (9) which is connected to the state observer (8) and to a steering angle sensor and which compares the setpoint yaw rate, determined at least on the basis of the steering angle, and a measured yaw rate, wherein wheel-specific setpoint braking torques ($M_{wheel,req}$) are determined in accordance with the comparison result and fed to the wheel slip control device (7).

4. Brake system according to at least one of Claims 1 to 3, **characterized in that** the torque distribution device (6) is connected to the means for detecting a deceleration request and the splitting between the friction brake requests

($M_{fric,req}$) and the generator braking requests ($M_{reg,req}$) is carried out taking into account the current deceleration request ($a_{decel,req}$) and/or the current locking braking torque of the wheel and/or the velocity and/or the steering wheel angle and/or the lateral acceleration ($a_{lat}$).

5. Brake system according to at least one of Claims 1 to 4, **characterized in that** the electric drive control device (3) transmits the currently applied generator braking torque or torques ($M_{reg,curr}$) and/or the maximum generator braking torque or torques ($M_{cap}$) which can be generated to the torque distribution device (6), and the splitting between the friction braking requests ($M_{fric,req}$) and the generator braking request or requests ($M_{reg,req}$) is carried out taking into account the generator braking torque or torques which is/are currently applied and/or the maximum generator torque or torques ($M_{cap}$) which can be generated.

6. Brake system according to at least one of Claims 1 to 5, **characterized in that** the means for detecting a deceleration request also comprise an interface with a vehicle data bus via which an electronic control device, which is connected, in particular, to one or more surroundings sensors, transmits a deceleration request.

7. Brake system according to at least one of Claims 1 to 6, **characterized in that** the friction brake control device (5), the wheel slip control device (7) and the torque distribution device (6) are integrated into an electronic control device and are preferably implemented entirely or partially as program code which is executed by a computing unit of the electronic control device.

8. Method for controlling a brake system for a motor vehicle, in particular according to one of Claims 1 to 7, which comprises friction brakes on the wheels of at least one axle and at least one electric machine which is connected to at least one wheel and can be operated as a generator, comprising the steps:

   determining the current driving state by means of a state observer (8), wherein the current driving state comprises at least the current braking torque ($M_{wheel}$) and at least one of the two variables of the current wheel speed ($V_{wheel}$) and current slip for each individual wheel,
   determining wheel-specific setpoint braking torques ($M_{wheel,req}$) on the basis of a deceleration request taking into account the current driving state,
   splitting the setpoint braking torques ($M_{wheel,req}$) for the individual wheels into friction braking requests ($M_{fric,req}$) and a generator braking request/requests ($M_{reg,req}$), wherein the generator braking request ($M_{reg,req}$) is determined in accordance with the current braking torque ($M_{wheel}$) and for a wheel which is connected to a generator the friction braking request ($M_{fric,req}$) is determined on the basis of a comparison of the setpoint braking torque with the generator braking request ($M_{reg,req}$), and
   activating the friction brakes according to the friction braking requests ($M_{fric,req}$) and operating the electric machine according to the generator braking request/requests ($M_{reg,req}$).

9. Method according to Claim 8, **characterized in that** a first electric machine is connected to at least two wheels, and **in that** the generator braking request ($M_{reg,req}$) to the first electric machine is selected as a predefined portion of the minimum current braking torque ($M_{wheel}$) of the coupled wheels.

10. Method according to Claim 8, **characterized in that** at least one wheel is assigned an electric machine which is connected to no other wheel, and **in that** the generator braking request ($M_{reg,req}$) to the assigned machine is determined on the basis of a characteristic curve $K(\mu)$ which is dependent on the estimated coefficient of friction $\mu$, preferably according to the relationship $K(\mu) \cdot C \cdot M_{wheel}$ with a constant $C$ and the current braking torque $M_{wheel}$ at the wheel under consideration.

**Revendications**

1. Système de freinage pour un véhicule automobile, comprenant des freins à friction aux roues d'au moins un essieu, qui sont commandés par un dispositif de commande de freins à friction (5), au moins une machine électrique, qui est reliée à au moins une roue et qui est commandée au moins temporairement en générateur par un dispositif de commande d'entraînement électrique (3), des moyens pour détecter une demande de ralentissement ($a_{decel,req}$), en particulier un capteur pour détecter un actionnement de pédale de frein, et un dispositif de régulation de glissement de roue (7), dans lequel le ou les moyens pour détecter une demande de ralentissement ($a_{decel,req}$) est/sont relié (s) au dispositif de régulation de glissement de roue (7), qui prescrit des couples de freinage de consigne ($M_{Rad,req}$) pour chaque roue selon la demande de ralentissement ($a_{decel,req}$), dans lequel le dispositif de régulation de glissement de roue (7) est relié à un dispositif de distribution de couple (6), qui est relié au dispositif de commande de freins à friction (5) et au dispositif de commande d'entraînement électrique (3) et prescrit, selon les couples de freinage de consigne ($M_{Rad,req}$), des demandes de freinage à friction ($M_{fric,req}$) au dispositif de commande de freins à friction (5) et des demandes de freinage en générateur ($M_{reg,req}$) au dispositif de commande d'entraînement électrique (3), **caractérisé en ce que** l'on détermine l'état de marche actuel au moyen d'un observateur d'état (8), dans lequel l'état de marche actuel comprend au moins un couple de freinage actuel ($M_{Rad}$) et au moins une des deux grandeurs vitesse de roue actuelle ($v_{Rad}$) ainsi que glissement actuel pour chacune des roues individuellement, et **en ce que** l'on détermine la demande de freinage en générateur ($M_{reg,req}$) selon le couple de freinage actuel ($M_{Rad}$), dans lequel on détermine pour une roue, qui est reliée à un générateur, la demande de freinage à friction ($M_{fric,req}$) à l'aide d'une comparaison du couple de freinage de consigne ($M_{Rad,req}$) avec la demande de freinage en générateur ($M_{reg,req}$).

2. Système de freinage selon la revendication 1, **caractérisé en ce que** le dispositif de régulation de glissement de roue (7) est relié à un observateur d'état (8), qui est relié à des capteurs pour détecter au moins les vitesses de roue ($v_{Rad}$) de chaque roue individuelle, le taux de lacet ($\psi$) et l'accélération transversale ($a_{Lat}$), dans lequel on détermine au moins les couples de freinage présents momentanément ($M_{Rad,act}$) aux roues individuelles et on en tient compte lors de la prescription des couples de freinage de consigne ($M_{Rad,req}$).

3. Système de freinage selon la revendication 2, **caractérisé par** un dispositif de régulation de couple de lacet (9), qui est relié à l'observateur d'état (8) et à un capteur d'angle de braquage et qui compare le taux de lacet de consigne déterminé au moins à l'aide de l'angle de braquage et un taux de lacet mesuré, dans lequel on détermine des couples de freinage de consigne individuels de roue ($M_{Rad,req}$) selon le résultat de la comparaison et on les envoie au dispositif de régulation de glissement de roue (7).

4. Système de freinage selon au moins une des revendications 1 à 3, **caractérisé en ce que** le dispositif de distribution de couple (6) est relié au ou aux moyen (s) pour détecter une demande de ralentissement et on effectue la répartition entre des demandes de freinage à friction ($M_{fric,req}$) et des demandes de freinage en générateur ($M_{reg,req}$) en tenant compte de la demande de ralentissement actuelle ($a_{decel,req}$) et/ou du couple de freinage de blocage actuel de la roue et/ou de la vitesse de roulage et/ou de l'angle de braquage et/ou de l'accélération transversale ($a_{Lat}$).

5. Système de freinage selon au moins une des revendications 1 à 4, **caractérisé en ce que** le dispositif de commande d'entraînement électrique (3) envoie le/les couple(s) de freinage en générateur actuellement appliqué (s) ($M_{reg,act}$) et/ou le/les couples de freinage en générateur réalisables au maximum ($M_{kap}$) au dispositif de distribution de couple (6) et on effectue la répartition entre des demandes de freinage à friction ($M_{fric,req}$) et des demandes de freinage en générateur ($M_{reg,req}$) en tenant compte du/des couples de freinage en générateur actuellement appliqué(s) et/ou réalisable(s) au maximum ($M_{kap}$).

6. Système de freinage selon au moins une des revendications 1 à 5, **caractérisé en ce que** les moyens pour détecter une demande de ralentissement comprennent en outre une interface avec un bus de données du véhicule, par lequel un dispositif de commande électronique, qui est relié en particulier à un ou plusieurs capteurs périphériques, envoie une demande de ralentissement.

7. Système de freinage selon au moins une des revendications 1 à 6, **caractérisé en ce que** le dispositif de commande de frein à friction (5), le dispositif de régulation de glissement de roue (7) et le dispositif de distribution de couple (6) sont intégrés dans un appareil de commande électronique et sont mis en oeuvre de préférence entièrement ou partiellement sous la forme d'un code de programme exécuté par une unité de calcul de l'appareil de commande électronique.

8. Procédé de commande d'un système de freinage pour un véhicule automobile, en particulier selon l'une quelconque des revendications 1 à 7, qui comprend des freins à friction aux roues d'au moins un essieu et au moins une machine électrique, qui est reliée à au moins une roue et qui peut fonctionner en générateur, comprenant les étapes suivantes:

  déterminer l'état de roulage actuel par un observateur d'état (8), dans lequel l'état de roulage actuel comprend au moins le couple de freinage actuel ($M_{Rad}$) et au moins une des deux grandeurs vitesse de roue actuelle ($v_{Rad}$) ainsi que glissement actuel pour chaque roue individuellement,
  déterminer des couples de freinage de consigne des roues individuelles ($M_{Rad,req}$) à l'aide d'une demande de ralentissement en tenant compte de l'état de roulage actuel,
  répartir les couples de freinage de consigne ($M_{Rad,req}$) pour les roues individuelles en demandes de freinage à friction ($M_{fric,req}$) et demandes de freinage en générateur ($M_{reg,req}$), dans lequel on détermine la demande de freinage en générateur ($M_{reg,req}$) selon le couple de freinage actuel ($M_{Rad}$) et on détermine pour une roue, qui est reliée à un générateur, la demande de freinage à friction ($M_{fric,req}$) à l'aide d'une comparaison du couple de freinage de consigne avec la demande de freinage en générateur ($M_{reg,req}$),
actionner les freins à friction selon les demandes de freinage à friction ($M_{fric,req}$) et faire fonctionner la machine électrique selon la/les demandes de freinage en générateur ($M_{reg,req}$).

**9.** Procédé selon la revendication 8, **caractérisé en ce qu'**une première machine électrique est reliée à au moins deux roues, et **en ce que** la demande de freinage en générateur ($M_{reg;req}$) à la première machine électrique est choisie comme une fraction prédéterminée du couple de freinage actuel minimal ($M_{Rad}$) des roues couplées.

**10.** Procédé selon la revendication 8, **caractérisé en ce qu'**une machine électrique, qui n'est reliée à aucune autre roue, est associée à au moins une roue, et **en ce que** l'on détermine la demande de freinage en générateur ($M_{reg,req}$) à la machine associée à l'aide d'une courbe caractéristique $K(\mu)$ dépendant d'un coefficient de frottement estimé $\mu$, de préférence selon la relation $K(\mu) \cdot C \cdot M_{Rad}$ avec une constante C et le couple de freinage actuel ($M_{Rad}$) à la roue observée.

Fig. 1

**Elektrischer Antrieb 2**

E-Motor-steuerung 3

$M_{reg}$

$M_{reg,req}$

$M_{kap}$ , $M_{reg,act}$

**Rekuperatives Bremssystem 4**

Reibbrems-steuerung 5

$4*M_{fric}$

$4*M_{fric,act}$

Zustands-beobachter 8

$4*v_{Rad}$ , $\Psi$ , $a_{Lat}$

$M_{reg,act}$

$4*M_{fric,req}$

GMR 9

$4*M_{Rad,act}$

Momenten-Verteilung 6

$4*M_{Rad,req}$

Bremsschlupf-Regelung 7

$a_{accel,req}$

$a_{decel,req}$

1

Fig. 2 (a)

Fig. 2 (b)

EP 2 760 714 B1

**EP 2 760 714 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011003346 A1
- EP 0792228 B1
- WO 2011015422 A1
- AT 12010 U2
- DE 102009030816 A1